# EUROPEAN PATENT SPECIFICATION

(11) **EP 2 032 969 B1**
(45) Date of publication and mention of the grant of the patent: **26.10.2011**
(21) Application number: 07750839.8
(22) Date of filing: 16.02.2007
(51) Int. Cl.: G01N 21/01, G01N 21/31, G01N 21/47, G01N 21/85

(54) **OPTICAL REFLECTION PROBE**
OPTISCHE REFLEXIONSSONDE
SONDE OPTIQUE À RÉFLEXION

(30) Priority: 17.02.2006 US 774785 P
(43) Date of publication of application: 11.03.2009
(73) Proprietor: ColVisTec AG, 12489 Berlin (DE)
(72) Inventor: O'ROURKE, Patrick E., Georgia 30907 (US)
(74) Representative: Lucas, Brian Ronald
(86) International application number: PCT/US2007/004027
(87) International publication number: WO 2007/098003

(56) References cited:
- US-A- 4 469 398
- US-A- 5 253 321
- US-B1- 6 563 992

## Description

### CROSS REFERENCE TO RELATED PATENTS

This application claims priority to United States Provisional Patent Application, Serial No. 60/774,785, filed 02/17/2006.

### BACKGROUND OF THE INVENTION

The present invention relates to optical probes such as those used with spectrometers in obtaining spectra for analysis of color and composition of materials.

Real time, online analysis of characteristics such as color and composition of materials in industrial processes is an important capability, particularly for quality control of manufactured products. As constituents are combined and processed, changes in these material characteristics are possible and often inevitable. Knowing when they occur and why they occur is essential in producing uniformly high quality products.

It is not always easy to measure composition and color of material online while the material is undergoing industrial processing. It is typically much easier to obtain small samples and analyze those in a laboratory. However, samples may not be representative of the whole and, if the material departs from a specified composition or color, it may be essential to know that fact immediately, and not have to wait for a sample to be analyzed in a lab, so that the process can be stopped and the departure rectified before material is wasted.

The choice of inline or off-line measurement is not always that easy to make. For example, in the extrusion of plastic parts, color specifications may be a critical characteristic of the finished parts. However, because of the high pressure and temperature environment on the inside of an extruder, it is difficult to obtain accurate measurements inline.

Optical probes are capable of revealing a great deal of information about industrial processes such as plastic extrusion. However, a significant problem associated with optical probes, particularly in high temperature, high pressure environment such as in the interiors of polymeric extruders is the seal of the window to the probe housing. In an extruder, temperatures can reach 400° C and pressures of 689 bar (10000 psig). Furthermore, in routine use an extruder will cycle between low temperatures and pressures and these much higher levels.

Inevitably, optical probes encounter alignment and calibration problems. Removing the probe requires shutdown of the process equipment and the inevitable time to cool and depressurize it with the attendant lost productivity.

Accordingly, there remains a need for a probe that is rugged and low cost, that withstands harsh conditions of temperature and pressure, but that can be recalibrated without depressurizing the reaction chamber in which it is inserted.

US 6 563 992 discloses a fiber-optic coupled diffuse reflectance probe that is adapted to detachably connect to a bifurcated fiber bundle. The probe includes a solid light guide for separating the bundle from the target within a small-diameter probe body. The probe is useful for analyzing high temperature and high pressure targets, through relatively small fittings, as is required in polymer extrusion applications. The solid light guide may extend along all or along a lesser portion of the probe body's length. Its fiber-end may be coupled directly to the illumination and detector fibers or indirectly, and at some distance from the fibers, by way of a lens or a hollow light guide. Its target-end may be exposed to terminate in a direct face-to-face relationship with the target, or it may be located behind an intermediate window. The solid light guide is characterized by a target-end refracting surface that minimizes stray light. In particular, such surface is designed to ensure that light internally reflected from that surface with bounce back to the detector fiber at angles that are outside of the detector fiber's field of view. The preferred surface is a bevelled plane, but other flat and non-flat surfaces are possible. The target-end refracting surface also tends to ensure that reflections from the window surfaces, if present, are returned to the detector fiber at angles outside of its field of view. The window itself may be canted too to help ensure that rays which are unusually divergent due to imperfections are still returned to the the detector fiber at angles outside of its field of view.

US 5 253 321 discloses a fiber optic probe mounting assembly having an inner assembly which receives an optical fiber cable and holds it in a sealed alignment. The inner assembly is sealingly received in an outer assembly which is provided with means for attachment to a pressure vessel.

### SUMMARY OF THE INVENTION

According to its major aspects, the present invention is an optical reflecting probe that can be used in harsh environments of a polymer extrudes and can be recalibrated without breaking the seal of the reaction chamber in which it is inserted. The optical reflecting probe has an optical window seal rugged enough to withstand the conditions inside an extruder during the extrusion of polymers. The distal end of a fiber optic assembly engages the optical window of the optical window seal by using a fiber guide tube and probe retainer. At the proximal end of the fiber optic assembly is a retaining nut. Surrounding the fiber optic assembly is a fiber guide tube with its proximal end threaded to the retaining nut of the fiber optic assembly and the distal end being threaded to the window seal.

A probe retainer surrounds the guide tube. Its distal end has exterior threads that secure the optical reflection probe to the reaction chamber. Its proximal end is merely cantilevered back over the guide tube, without connection to the guide tube, but protecting and maintaining the alignment of it. By carefully unscrewing the distal end of the guide tube from the window seal, the fiber optic assembly can be removed while the window seal remains in place holding the seal in the wall of the reaction chamber.

In addition, a compression spring system carried on the exterior of the fiber optic assembly engages a step in the diameter of the interior wall of the fiber guide tube so that, when the distal end of the fiber optic assembly just touches the rear face of the window in the window seal, the compression spring system reaches the step and thus begins to compress, thereby avoiding having the distal end bore into the rear face of the lens.

An important feature of the present invention is the physical separation of the window seal, the fiber optic assembly and the guide tube components, which makes it possible to unscrew the fiber optic assembly without removing the window seal. As a consequence, the pressure of the reaction chamber does not have to be reduced when the fiber optic assembly is removed. Thus, a replacement fiber optic assembly can be installed in a few minutes rather than in hours.

Another feature of the present inventions is the use of the compression spring assembly to avoid grinding of the optic fiber assembly distal end against the rear face of the optic window. As the fiber optic assembly is screwed in, the spring compresses to take up the pressure of the distal end that would otherwise be applied against the lens.

These and other features and their advantages will be apparent to those skilled in the art of optical probes from a careful reading of the Detailed Description of Preferred Embodiments accompanied by the following drawings.

### BRIEF DESCRIPTION OF THE SEVERAL VIEWS OF THE DRAWINGS

In the drawings,

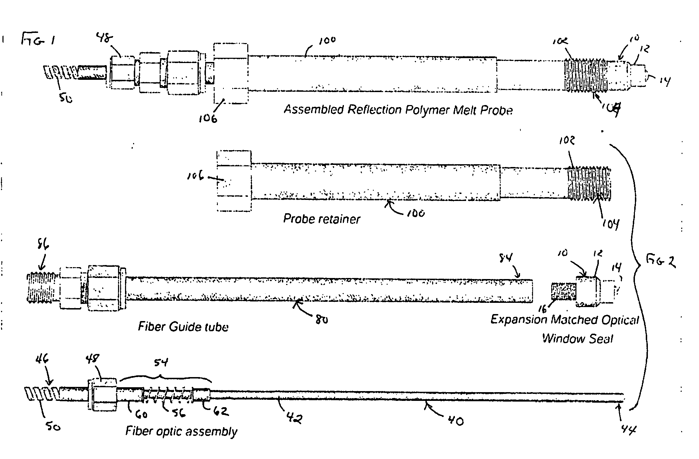

Fig. 1 is a side view of an optical reflection probe, according to a preferred embodiment of the present invention;

Fig. 2 is an exploded view of the optical reflection probe shown in Fig. 1; and

Fig. 3 is cross sectional view of the optical reflection probe shown in Fig. 1.

### DETAILED DESCRIPTION OF THE INVENTION

The present invention is an optical probe. In particular it is an optical probe for use with a spectrometer for measuring a characteristic, such as color or composition, of a material undergoing industrial processing in a high temperature, high pressure environment in a polymer extruder.

Referring now to the figures, the optical reflecting probe includes four components: a window seal 10, a fiber optic assembly 40, a fiber guide tube 80 and a probe retainer 100. Window seal 10 includes a fitting 12 with a lens 14 and a sleeve 16 that, in combination, act to hold lens 14 firmly to and in sealing engagement with fitting 12. Fitting 12 is made of a material that can withstand the temperatures and pressures of the industrial process without deformation and without reacting chemically with the materials being processes or other chemicals in the processing environment. A material such as a corrosion-resistant alloy with small coefficient of thermal expansion and high strength at elevated temperatures (e.g., a nickel-based superalloy, such as Hastelloy (one variety being Hastelloy C276) made by Haynes International) or titanium is suitable for such processes as extrusion of polymers. The exterior surface of fitting 12 is formed to extend through a standard instrumentation port in the wall of the processing conduit or reaction chamber (not shown) and to seat flush with the interior surface of the vessel.

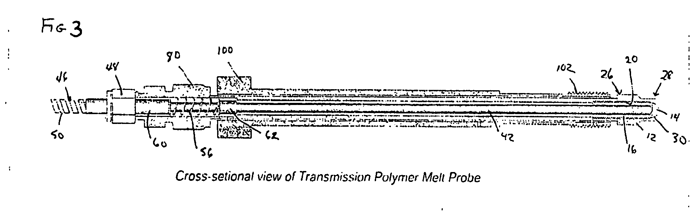

Fitting 12, best seen in Fig. 3, has an interior wall 20 that defines an interior and has a first opening at a first end 26 and a second opening at an opposing second end 28. Interior wall 20 of fitting 12 is threaded through much of its length but terminates in a smooth hemispherical contour 30 and a reduced diameter at second end 28.

Lens 14 is a hemisphere, preferably 5 mm in diameter, very nearly the same diameter as hemispherical contour 30 so that, when lens 14 is placed in engagement with hemispherical contour 30, there is a close fit, that is, the tolerances are less than 1% of the diameter of lens 14 and preferably less than 0.25% of the lens diameter. (Tolerances should generally not exceed ± 0.0127 mm (± 0.0005) in. so that there is no leakage between the tens and fitting. Lens 14 is preferably made of an optically clear material having a very similar coefficient of thermal expansion as fitting 12. For example, if fitting 12 is made of titanium, a sapphire lens 14 is compatible because its thermal expansion coefficient is similar to that of titanium's and because sapphire is suitable for optical measurements of polymers in an extruder.

It is important that lens 14 be hemispherical for a number of reasons. First, a hemispherical lens has the right shape for the optical requirements that are placed upon it in a probe. Second, a hemispherical lens is less difficult to make than other shapes. Second, the curved side of a hemispherical lens will fit snuggly against hemispherical contour 30 for a good seal. Other combinations of corresponding shapes of fitting 12 and lens 14 (e.g., another lens having smoothly contoured outer surface) will also provide a good seal notwithstanding the fact that they may be more difficult and expensive to make. However, a hemispherically shaped lens will provide the optically convenient surface for the transmitted and received light beams from the optical fibers carried within probe 10. and will provide a surface to which materials in the chamber do not readily adhere, unlike a flat surface for example, to which materials such as polymers do readily adhere.

Sleeve 16 is a hollow tube having an interior wall that defines an interior. The exterior surface of sleeve 16 is threaded and dimensioned to be screwed into fitting 12 and be advanced to the point where it engages the flat end of lens 14 so as to hold it firmly against hemispherical contour 30.

Fiber optic assembly 40 includes a shaft 42 that contains optic fibers, preferably an array of them, and most preferably an array of six for illumination around one for detection. The distal end 44 of fiber optic assembly 40 (which is arbitrarily assigned the position closest to window seal 10) can be either flat or tapered to a point, preferably with a 30° taper. Distal end 44 slips easily into the hollow interior of sleeve 16 and can be easily advanced to lens 14. An opposing proximal end 46 (farther end from window seal 10) carries a retaining nut 48 and a connection to a flexible cable 50 that leads to a spectrometer (not shown). Retaining nut 48 has interior threads. A compression spring assembly 54 is carried on shaft 42 near proximal end and abuts retaining nut 48. Compression spring assembly 54 includes a compression spring 56 and a first and opposing second bushing 60, 62. one on each end.

Surrounding fiber optic assembly 40 is fiber guide tube 80. which is hollow, as best seen in Fig. 3, and has interior threads on its distal end 84 and exterior threads on its proximal end 86. Distal end 84 is threaded to the exterior threads on sleeve 16 to the point where distal end 84 abuts fitting 12. Retaining nut 48 on fiber optic assembly threads to proximal end 86 to secure fiber optic assembly 40 to window seal 10.

Inside fiber optic guide 80 is a step in the interior diameter that will allow compression spring assembly 54 to compress if fiber guide tube 40 is advanced against window seal 10 to the point where distal end 44 of fiber optic assembly contacts the rear surface of lens 14. Compression spring assembly 54 thus protects lens 14 from excessive pressure that might otherwise cause it damage.

Surrounding fiber guide tube 80 is a probe retainer 100 having exterior threads 102 on its distal end 104 and a nut 106 on its proximal end. Exterior threads 102 are preferably compatible with standard pressure gauge port threads carried by a reaction chamber. As best seen in Fig. 3, probe retainer 100 does not touch fiber guide tube 80 but instead protects it and maintains its alignment when distal end 104 is threaded into a reaction chamber. The diameter of probe retainer 100 is such that it will prevent the ejection of window seal 10 in the event window seal falls and is pushed out of reaction chamber by its interior pressure.

In the event the present optic probe falls or requires calibration, fiber optic assembly 40 can be removed for calibration and an alternate fiber optic assembly installed in its place in one or two minutes. Retaining nut 48 is carefully unthreaded from guide tube end 86 and pulled free. Either a new fiber optic assembly 40 can replace the existing one or it may be cleaned. Fiber optic assembly 40 can be reinserted into guide tube 80. However window seal 10 can hold the seal to the wall of reaction chamber during this process; no shutdown and depressurization need take place.

This invention also relates to a process for monitoring the progress of a reaction or a manufacturing process by using the optical probe system disclosed herein.

The scope of the present invention is determined by the scope of the appended claims.

## Claims

1. An optical probe for use with a spectrometer for measuring a characteristic, such as colour or composition, of a material undergoing industrial processing in a polymer extruder, which optical probe comprises: a fibre optic assembly (40) mounted in a fibre guide tube (80) and a probe retainer (100); a window seal (10) comprising a fitting (12) and a window (14); wherein said probe retainer (100) has exterior threads (102) for securing said probe to a reaction chamber of a polymer extruder, the arrangement being such that, in use, said window (14) provides a path for transmission and reception of light by said fibre optic assembly (40) into and from an interior of said reaction chamber;
**characterised in that** said fibre optic assembly (40) comprises a compression spring assembly (54) and a retaining nut (48) for attaching said fibre optic assembly (40) to said fibre guide tube (80), the arrangement being such that, in use, said retaining nut (48) is releasable from said fibre guide tube (80) whereby said fibre optic assembly (40) is removable from said fibre guide tube (80) without breaking a seal between said fitting (12) and said reaction chamber, and said fibre optic assembly (40), or an identical replacement, is insertable into said fibre guide tube (80), tightening of said retaining nut (48) pushing said fibre optic assembly (40) into said fibre guide tube (80) to ensure contact between a tip (44) of said fibre optic assembly (40) and said window (14), said compression spring assembly (54) absorbing pressure as said retaining nut (48) is tightened to avoid grinding said tip (44) of said fibre optic assembly (40) against said window (14).

2. An optical probe as claimed in claim 1, wherein said window (14) comprises a lens having a smoothly contoured outer surface.

3. An optical probe as claimed in claim 2, wherein said fitting (12) comprises a first opening at a first end (26) and a second opening at an opposing second end (28), an interior wall (20) of said fitting (12) being threaded through much of its length and terminating in a smooth contour (30) and a reduced diameter at said second end (28), the arrangement being such that said window (14) is held firmly against said smooth contour (30) by a sleeve (16) threaded into said fitting (12) providing a seal.

4. An optical probe as claimed in claim 2 or 3, wherein said smoothly contoured outer surface comprises a hemispherical contour (30).

5. An optical probe as claimed in claim 2, 3 or 4, wherein said lens (14) comprises an optically clear material having a very similar coefficient of thermal expansion as said fitting (12).

6. An optical probe as claimed in claim 2, 3, 4 or 5, wherein said fibre guide tube (80) comprises a distal end (84) having interior threads (82), and is threaded onto said sleeve (16) into abutment with said fitting (12), whereby in use, said probe retainer (100) and said fibre guide tube (80) are fixed to said reaction chamber whilst said fibre optic assembly (40) is removable therefrom.

7. An optical probe as claimed in any of claims 1 to 6, wherein said fitting (12) comprises an exterior surface formed to fit with a standard instrumentation port in the wall of said reaction chamber and seat flush with an interior surface thereof.

8. An optical probe as claimed in any of claims 1 to 7, wherein said compression spring assembly (54) comprises a compression spring (56) and a first and opposing second bushing (60, 62) at either end thereof.

9. An optical probe as claimed in any preceding claim, wherein prior to use said probe retainer (100) is slidable axially along and around said fibre guide tube (80), whereby during installation said probe retainer (100) may be rotated to mate said exterior threads (102) with corresponding threads in said reaction chamber, but without rotating said fibre guide tube (80) and fibre optic assembly (40).

10. An optical probe as claimed in claim 9, wherein a forward end of said probe retainer (100) is contactable with a corresponding end of said fitting (12), whereby during use, said probe retainer urges a sealing surface of said fitting into sealing engagement with a mating surface of said reaction chamber.

11. An optical probe as claimed in any preceding claim, wherein said exterior threads (102) are compatible with standard pressure gauge port threads of a reaction chamber.

12. A fibre optic assembly for use in an optical probe as claimed in claim 1, which fibre optic assembly comprises a compression spring assembly (54) and a retaining nut (48) for attaching said fibre optic assembly (40) to a fibre guide tube (80) of said optical probe.

13. A method of measuring a characteristic, such as colour or composition, of a material undergoing industrial processing in a polymer extruder, which method comprises the step of measuring said characteristic using an optical probe as claimed in any of claims 1 to 11.

14. A method according to claim 13, further comprising the step of removing a fibre optic assembly part (40) of said optical probe for calibration, cleaning or replacement, whilst leaving said industrial process running in said reaction chamber.

## Patentansprüche

1. Optische Sonde zur Verwendung bei einem Spektrometer zum Messen einer Eigenschaft wie z. B. Farbe oder Zusammensetzung eines Materials, das in einem Polymer-Extruder einer industriellen Verarbeitung unterzogen wird, wobei die optische Sonde umfasst: eine Faseroptik-Baugruppe (40), die in einem Faserführungsrohr (80) und einer Sondenhalterung (100) angebracht ist; eine Fensterabdichtung (10), die ein Formstück (12) und ein Fenster (14) umfasst; wobei die Sondenhalterung (100) Außengewinde (102) zum Befestigen der Sonde an einer Reaktionskammer eines Polymer-Extruders aufweist, wobei die Anordnung derart ist, dass im Gebrauch das Fenster (14) einen Weg zum Senden und Empfangen von Licht durch die Faseroptik-Baugruppe (40) in den Innenraum der Reaktionskammer bzw. von diesem schafft;
**dadurch gekennzeichnet, dass** die Faseroptik-Baugruppe (40) eine Druckfeder-Baugruppe (54) und eine Sicherungsmutter (48) zum Anbringen der Faseroptik-Baugruppe (40) an dem Faserführungsrohr (80) umfasst, wobei die Anordnung derart ist, dass im Gebrauch die Sicherungsmutter (48) von dem Faserführungsrohr (80) gelöst werden kann, wodurch die Faseroptik-Baugruppe (40) von dem Faserführungsrohr (80) entfernt werden kann, ohne eine Abdichtung zwischen dem Formstück (12) und der Reaktionskammer zu unterbrechen, und die Faseroptik-Baugruppe (40) oder ein baugleicher Ersatz in das Faserführungsrohr (80) eingesetzt werden kann, wobei die Sicherungsmutter (48) angezogen wird, die Faseroptik-Baugruppe (40) in das Faserführungsrohr (80) geschoben wird, um einen Kontakt zwischen einer Spitze (44) der Faseroptik-Baugruppe (40) und dem Fenster (14) sicherzustellen, wobei die Druckfeder-Baugruppe (54) dann, wenn die Sicherungsmutter (48) angezogen wird, einen Druck aufnimmt, um ein Schleifen der Spitze (44) der Faseroptik-Baugruppe (40) an dem Fenster (14) zu vermeiden.

2. Optische Sonde nach Anspruch 1, wobei das Fenster (14) eine Linse mit einer glatt konturierten äußeren Oberfläche umfasst.

3. Optische Sonde nach Anspruch 2, wobei das Formstück (12) eine erste Öffnung an einem ersten Ende (26) und eine zweite Öffnung an einem gegenüberliegenden zweiten Ende (28) umfasst, wobei eine Innenwand (20) des Formstücks (12) über ein Großteil ihrer Länge mit Gewinde versehen ist und in einer glatten Kontur (30) und mit einem verringerten Durchmesser an dem zweiten Ende (28) endet, wobei die Anordnung derart ist, dass das Fenster (14) fest an der glatten Kontur (30) durch eine Hülse (16) gehalten wird, die in das Formstück (12) geschraubt ist, wodurch eine Abdichtung geschaffen wird.

4. Optische Sonde nach Anspruch 2 oder 3, wobei die glatt konturierte äußere Oberfläche eine halbkugelförmige Kontur (30) aufweist.

5. Optische Sonde nach Anspruch 2, 3 oder 4, wobei die Linse (14) ein lichtdurchlässiges Material mit einem sehr ähnlichen thermischen Ausdehnungskoeffizienten wie das Formstück (12) umfasst.

6. Optische Sonde nach Anspruch 2, 3, 4 oder 5, wobei das Faserführungsrohr (80) ein distales Ende (84) mit Innengewinde (82) umfasst und an die Hülse (16) bis zum Anliegen an dem Formstück (12) geschraubt ist, wodurch im Gebrauch die Sondenhalterung (100) und das Faserführungsrohr (80) an der Reaktionskammer befestigt sind, während die Faseroptik-Baugruppe (40) von dieser entfernt werden kann.

7. Optische Sonde nach einem der Ansprüche 1 bis 6, wobei das Formstück (12) eine äußere Oberfläche umfasst, die so ausgebildet ist, dass sie an einen üblichen Geräteanschluss in der Wand der Reaktionskammer passt und bündig mit einer inneren Oberfläche hiervon sitzt.

8. Optische Sonde nach einem der Ansprüche 1 bis 7, wobei die Druckfeder-Baugruppe (54) eine Druckfeder (56) und an jedem ihrer Enden eine erste und eine gegenüberliegende zweite Buchse (60, 62) umfasst.

9. Optische Sonde nach einem vorhergehenden Anspruch, wobei vor dem Gebrauch die Sondenhalterung (100) axial längs des Faserführungsrohrs (80) und um dieses verschoben werden kann, wodurch die Sondenhalterung (100) während der Installation gedreht werden kann, um das Außengewinde (102) an einem entsprechenden Gewinde in der Reaktionskammer in Eingriff zu bringen, jedoch ohne das Faserführungsrohr (80) und die Faseroptik-Baugruppe (40) zu drehen.

10. Optische Sonde nach Anspruch 9, wobei ein vorderes Ende der Sondenhalterung (100) mit einem entsprechenden Ende des Formstücks (12) in Kontakt gebracht werden kann, wodurch die Sondenhalterung im Gebrauch eine Dichtungsfläche des Formstücks in einen Dichtungseingriff an einer Passfläche der Reaktionskammer bringt.

11. Optische Sonde nach einem vorhergehenden Anspruch, wobei das Außengewinde (102) passend zu einem Gewinde des üblichen Druckmessanschlusses einer Reaktionskammer ist.

12. Faseroptik-Baugruppe zur Verwendung in einer optischen Sonde nach Anspruch 1, wobei die Faseroptik-Baugruppe eine Druckfeder-Baugruppe (54) und eine Sicherungsmutter (48) zum Befestigen der Faseroptik-Baugruppe (40) an einem Faserführungsrohr (80) der optischen Sonde umfasst.

13. Verfahren zum Messen einer Eigenschaft wie z. B. Farbe oder Zusammensetzung eines Materials, das in einem Polymer-Extruder einer industriellen Verarbeitung unterzogen wird, wobei das Verfahren den Schritt zum Messen der Eigenschaft unter Verwendung einer optischen Sonde nach einem der Ansprüche 1 bis 11 umfasst.

14. Verfahren nach Anspruch 13, das ferner den Schritt zum Entfernen eines Teils der Faseroptik-Baugruppe (40) der optischen Sonde zur Kalibrierung, Reinigung oder Ersetzung umfasst, während der industrielle Prozess in der Reaktionskammer weiter abläuft.

## Revendications

1. Sonde optique à utiliser avec un spectromètre en vue de mesurer une caractéristique, telle que la couleur ou la composition, d'un matériau subissant un traitement industriel dans une extrudeuse de polymère, laquelle sonde optique comporte : un dispositif à fibre optique (40) monté dans un tube de guidage de fibre (80) et un dispositif de retenue de sonde (100) ; un joint étanche de fenêtre (10) comprenant un élément d'ajustement (12) et une fenêtre (14) ; dans laquelle ledit dispositif de retenue de sonde (100) présente des filetages extérieurs (102) permettant de fixer ladite sonde à une chambre de réaction d'une extrudeuse de polymère, l'agencement étant tel que, en fonctionnement, ladite fenêtre (14) fournit un chemin pour la transmission et la réception de la lumière par ledit dispositif à fibre optique (40) à l'intérieur, et à partir de l'intérieur, de ladite chambre de réaction ;
**caractérisée en ce que** ledit dispositif à fibre optique (40) comporte un ensemble de ressort de compression (54) et un écrou de retenue (48) pour fixer ledit dispositif à fibre optique (40) au dit tube de guidage de fibre (80), l'agencement étant tel que, en fonctionnement, ledit écrou de retenue (48) peut être libéré dudit tube de guidage de fibre (80) de sorte que ledit dispositif à fibre optique (40) puisse être retiré dudit tube de guidage de fibre (80) sans rompre un joint étanche se trouvant entre ledit élément d'ajustement (12) et ladite chambre de réaction, et **en ce que** ledit dispositif à fibre optique (40), ou un dispositif de substitution identique, peut être inséré dans ledit tube de guidage de fibre (80), un serrage dudit écrou de retenue (48) poussant ledit dispositif à fibre optique (40) dans ledit tube de guidage de fibre (80) afin d'assurer un contact entre une pointe (44) dudit dispositif à fibre optique (40) et ladite fenêtre (14), ledit ensemble de ressort de compression (54) absorbant la pression lorsque ledit écrou de retenue (48) est serré en vue d'éviter de broyer ladite pointe (44) dudit dispositif à fibre optique (40) contre ladite fenêtre (14).

2. Sonde optique selon la revendication 1, dans laquelle ladite fenêtre (14) comprend une lentille présentant une surface extérieure profilée de façon lisse.

3. Sonde optique selon la revendication 2, dans laquelle ledit élément d'ajustement (12) comporte une première ouverture au niveau d'une première extrémité (26) et une seconde ouverture au niveau d'une seconde extrémité opposée (28), la paroi intérieure (20) dudit élément d'ajustement (12) étant filetée sur la plus grande partie de sa longueur et se terminant en un contour lisse (30) et un diamètre réduit au niveau de ladite seconde extrémité (28), l'agencement étant tel que ladite fenêtre (14) est solidement maintenue contre ledit contour lisse (30) par un manchon (16) fileté dans ledit élément d'ajustement (12) fournissant un joint étanche.

4. Sonde optique selon la revendication 2 ou 3, dans laquelle la surface extérieure profilée de façon lisse présente un profil hémisphérique (30).

5. Sonde optique selon la revendication 2, 3 ou 4, dans laquelle ladite lentille (14) comporte un matériau transparent optiquement présentant un coefficient de dilatation thermique très similaire à celui dudit élément d'ajustement (12).

6. Sonde optique selon la revendication 2, 3, 4 ou 5, dans laquelle ledit tube de guidage de fibre (80) comporte une extrémité distale (84) présentant des filetages intérieurs (82), et est vissé sur ledit manchon (16) en relation de butée avec ledit élément d'ajustement (12), de sorte que, en fonctionnement, ledit dispositif de retenue de sonde (100) et ledit tube de guidage de fibre (80) sont fixés à ladite chambre de réaction tout en permettant de pouvoir en retirer le dispositif à fibre optique (40).

7. Sonde optique selon l'une quelconque des revendications 1 à 6, dans laquelle ledit élément d'ajustement (12) comporte une surface extérieure formée afin de s'ajuster avec un orifice d'instrumentation standard dans la paroi de ladite chambre de réaction et une embase de niveau avec sa surface intérieure.

8. Sonde optique selon l'une quelconque des revendications 1 à 7, dans laquelle ledit ensemble de ressort de compression (54) comprend un ressort de compression (56) et un premier et un second manchon de raccordement (60, 62) au niveau de l'une et l'autre de ses extrémités.

9. Sonde optique selon l'une quelconque des revendications précédentes, dans laquelle avant utilisation, ledit dispositif de retenue de sonde (100) peut coulisser axialement le long, et autour, dudit tube de guidage de fibre (80), de sorte que, durant l'installation , ledit dispositif de retenue de sonde (100) peut être tourné afin de faire coïncider lesdits filetages extérieurs (102) avec les filetages correspondants de ladite chambre de réaction, mais sans faire tourner ledit tube de guidage de fibre (80) ni ledit dispositif à fibre optique (40).

10. Sonde optique selon la revendication 9, dans laquelle une extrémité avant dudit dispositif de retenue de sonde (100) peut se trouver en contact avec une extrémité dudit élément d'ajustement (12), de sorte que, pendant le fonctionnement, ledit dispositif de retenue de sonde presse une surface d'étanchéité dudit élément d'ajustement en un engagement d'étanchéité avec une surface de raccordement de ladite chambre de réaction.

11. Sonde optique selon l'une quelconque des revendications précédentes, dans laquelle lesdits filetages extérieurs (102) sont compatibles avec des filetages standards d'orifice de jauge de pression d'une chambre de réaction.

12. Dispositif à fibre optique à utiliser dans une sonde optique selon la revendication 1, lequel dispositif à fibre optique comporte un ensemble de ressort de compression (54) et un écrou de retenue (48) pour fixer ledit dispositif à fibre optique (40) à un tube de guidage de fibre (80) de ladite sonde optique.

13. Procédé de mesure d'une caractéristique, telle que la couleur ou la composition, d'un matériau subissant un traitement industriel dans une extrudeuse de polymère, lequel procédé comprend l'étape de mesure de ladite caractéristique en utilisant une sonde optique selon l'une quelconque des revendications 1 à 11.

14. Procédé selon la revendication 13 comportant, de plus, l'étape de retrait d'une partie du dispositif à fibre optique (40) de ladite sonde optique en vue d'un calibrage, d'un nettoyage ou d'un remplacement, tout en laissant ledit procédé industriel suivre son cours dans ladite chambre de réaction.
